# EUROPÄISCHE PATENTANMELDUNG

(11) **EP 3 576 465 A1**
(43) Veröffentlichungstag der Anmeldung: **04.12.2019**
(21) Anmeldenummer: 19173529.9
(22) Anmeldetag: 09.05.2019
(51) Int. Cl.: H04W 48/14, F16P 3/14, H04W 84/12

(54) **VERFAHREN ZUM BETREIBEN EINER DRAHTLOSEN KOMMUNIKATIONSVERBINDUNG UND SYSTEMANORDNUNG**

(30) Priorität: 30.05.2018 DE 102018208609
(71) Anmelder: Siemens Aktiengesellschaft, 80333 München (DE)
(72) Erfinder: Huth, Hans-Peter, 80638 München (DE); Zeiger, Florian, 85635 Höhenkirchen-Siegertsbrunn (DE)

(57) **Zusammenfassung**

Eine Kommunikationsverbindung soll sicher und komfortabel betrieben werden. Daher wird ein Verfahren zum Betreiben einer ersten drahtlosen Kommunikationsverbindung (8) zwischen einem ersten System (1) und einem zweiten System (2) durch Erfassen eines Kennzeichens (10) des ersten Systems (1) durch das zweite System (2) und Übermitteln eines zweiten Detektionssignals in Abhängigkeit von dem Erfassen des Kennzeichens (10) an ein drittes System (3) über eine zweite drahtlose Kommunikationsverbindung (14) vorgeschlagen. Eine Zulässigkeit der ersten Kommunikationsverbindung (8) wird in dem dritten System (3) validiert und entsprechende Validierungssignale werden an das erste System (1) und das zweite System (2) übertragen. Schließlich erfolgt das Aufbauen oder Aufrechterhalten der ersten drahtlosen Kommunikationsverbindung (8) in Abhängigkeit von dem übermittelten Validierungssignal.

## Beschreibung

Die vorliegende Erfindung betrifft ein Verfahren zum Betreiben einer drahtlosen Kommunikationsverbindung zwischen einem ersten System und einem zweiten System. Darüber hinaus betrifft die vorliegende Erfindung eine Systemanordnung mit einem solchen ersten System und einem zweiten System.

Produktionsanlagen und -maschinen müssen häufig manuell durch Arbeiter bedient werden, um Wartungsarbeiten oder Kalibrationen durchzuführen. Dies erfordert vielfach eine direkte Kommunikation zwischen dem jeweiligen Arbeiter und der Maschine. Für den Aufbau dieser direkten Kommunikation muss der Arbeiter sich häufig nahe an der Maschine befinden. Insbesondere kann es erforderlich sein, dass er einerseits die Maschine sieht und andererseits in seinem Blickfeld behält, was er steuert. Insbesondere kann es bei schweren Stanz- beziehungsweise Schneidemaschinen erforderlich sein, dass der Benutzer den Stanz- beziehungsweise Schneidevorgang exakt beobachtet. Nur unter diesen Bedingungen darf der Nutzer die Maschine beispielsweise drahtlos steuern.

Sobald eine dieser Anforderungen nicht mehr erfüllt ist, müssen derartige Fernsteuerungen augenblicklich gestoppt werden. Üblicherweise ist jedoch eine Kabelverbindung unpraktikabel, weshalb die oben geschilderten Probleme für Drahtlosverbindungen gelöst werden müssen. Generell sollen also zwei Systeme A und B miteinander kommunizieren, wobei Sicherheitsaspekte einzuhalten sind. Insbesondere muss die Kommunikationsverbindung zwischen den Systemen A und B Sicherheitsvorschriften genügen, die zum einen der menschlichen Sicherheit dienen (Safety) und die zum anderen der Sicherheit der Maschine selbst dienen (Security).

Derzeitige Lösungen sehen häufig Kabelverbindungen zwischen dem Arbeiter und der Maschine vor. Anwendungen, die drahtlose Kommunikationsverbindungen erfordern, bedürfen typischerweise einer manuellen Aktivierung. Dabei sind oftmals ein Einloggen und eine Authentifizierung erforderlich. Diese Vorgänge erfordern eine hohe Verantwortung des jeweiligen Arbeiters beim exakten Befolgen definierter Prozeduren.

Die Aufgabe der vorliegenden Erfindung besteht darin, ein Verfahren vorzuschlagen, eine drahtlose Kommunikationsverbindung für den sicheren Gebrauch insbesondere mit Produktionsmaschinen und dergleichen bereitzustellen. Darüber hinaus soll eine entsprechende Systemanordnung vorgeschlagen werden.

Erfindungsgemäß wird diese Aufgabe durch die unabhängigen Patentansprüche gelöst. Vorteilhafte Weiterbildungen der Erfindung ergeben sich aus den Unteransprüchen.

Es wird demnach ein Verfahren zum Betreiben einer ersten drahtlosen Kommunikationsverbindung zwischen einem ersten System und einem zweiten System bereitgestellt. Bei der drahtlosen Kommunikationsverbindung kann es sich beispielsweise um eine Verbindung auf der Basis von Infrarotlicht oder dergleichen, aber auch um Funkverbindungen beispielsweise gemäß dem WLAN-Standard oder dem Bluetooth-Standard handeln. Das erste System und das zweite System, die in der Regel körperlich voneinander getrennt sind, können also über diese erste drahtlose Kommunikationsverbindung kommunizieren. Bei dem ersten System und dem zweiten System könnte es sich beispielsweise um ein Gerät oder eine Anlage handeln. So kann beispielsweise das erste System eine Produktionsmaschine und das zweite System ein Tablet zum Fernsteuern des ersten Systems sein. Unter dem "Betreiben" der Kommunikationsverbindung sind sowohl das Aktivieren der Verbindung als auch der laufende Betrieb sowie auch das Deaktivieren der Verbindung zu verstehen, oder jeder einzelne Schritt davon oder jedes Paar. In einem ersten Verfahrensschritt erfolgt ein Erfassen eines Kennzeichens des ersten Systems durch das zweite System. Beispielsweise ist das erste System mit einem QR-Tag beziehungsweise QR-Code versehen und das zweite System erfasst diesen QR-Tag optisch. Generell kann das Kennzeichen des ersten Systems jedoch auch jedes beliebige Merkmal dieses Systems sein. Es dient speziell dazu, das erste System zu erkennen beziehungsweise zu identifizieren. Das Erfassen erfolgt vorzugsweise automatisch durch das zweite System. Speziell kann vorgesehen sein, dass dieses Erfassen über einen eigenen Informationskanal, zum Beispiel durch eine Kamera optisch oder durch eine Empfangsantenne elektromagnetisch, erfolgt.

In einem zweiten Schritt erfolgt ein Übermitteln eines zweiten Detektionssignals in Abhängigkeit von dem Erfassen des Kennzeichens von dem zweiten System an ein drittes System über eine zweite drahtlose Kommunikationsverbindung. Bei dem soeben geschilderten Erfassen des Kennzeichens des ersten Systems von dem zweiten System wird von letzterem das zweite Detektionssignal generiert. Dieses zweite Detektionssignal kann eine Information des Kennzeichens enthalten, oder aber auch beispielsweise nur die Tatsache, dass ein vorbestimmtes Kennzeichen erfasst wurde. Das bei dem Erfassen des Kennzeichens generierte Detektionssignal wird nun an das dritte System übermittelt, wobei für das Übermitteln eine spezielle, nämlich die zweite drahtlose Kommunikationsverbindung, die zu der ersten Kommunikationsverbindung unterschiedlich ist, verwendet wird.

In einem dritten Verfahrensschritt erfolgt ein Validieren einer Zulässigkeit der ersten drahtlosen Kommunikationsverbindung in dem dritten System auf der Basis des zweiten Detektionssignals. Es wird also überprüft, ob es zulässig ist, zwischen dem ersten System und dem zweiten System die erste drahtlose Kommunikationsverbindung aufzubauen beziehungsweise aufrechtzuerhalten. Ist die erste Kommunikationsverbindung zulässig, so ist das Validieren positiv beziehungsweise erfolgreich. Liegt beispielsweise das zweite Detektionssignal nicht vor oder besitzt es einen von einem vorgegebenen Inhalt verschiedenen Inhalt so ist beispielsweise das erste System nicht vorhanden oder es ist ein falsches erstes System vorhanden. Darüber hinaus kann das zweite Detektionssignal beispielsweise auch andeuten, dass das erste System von dem zweiten System zu weit entfernt ist. In jedem dieser Fälle kann es unzulässig sein, die erste drahtlose Kommunikationsverbindung aufzubauen. Durch das Validieren der Zuverlässigkeit wird die entsprechende Bedingung überprüft und die erste drahtlose Kommunikationsverbindung wird entsprechend eingerichtet beziehungsweise aufrechterhalten oder abgeschaltet.

In einem vierten Verfahrensschritt erfolgt ein Übermitteln in Abhängigkeit von dem Validieren eines ersten Validierungssignals von dem dritten System an das erste System über eine dritte drahtlose Kommunikationsverbindung und eines zweiten Validierungssignals von dem dritten System an das zweite System über die zweite drahtlose Kommunikationsverbindung. Es wird also an beide Kommunikationspartner der ersten drahtlosen Kommunikationsverbindung, nämlich an das erste System und das zweite System, von dem dritten System ein jeweiliges Validierungssignal automatisch übertragen. Dabei können die Validierungssignale identisch oder unterschiedlich sein. Die Validierungssignale können verschiedenste Inhalte besitzen. Im einfachsten Fall handelt es sich bei einem Validierungssignal um ein binäres Signal, das lediglich angibt, ob die erste Kommunikationsverbindung zulässig ist oder nicht. Bei einer Weiterbildung kann vorgesehen sein, dass mittels des Validierungssignals auch Parameterwerte an das jeweilige System übertragen werden. Anhand dieser Parameterwerte kann dann die erste drahtlose Kommunikationsverbindung gesteuert werden. Insbesondere kann so die Frequenz, die Zeitdauer und dergleichen von der erste Kommunikationsverbindung festgelegt werden.

Anschließend erfolgt in einem fünften Verfahrensschritt ein Aufbauen oder Aufrechterhalten der ersten drahtlosen Kommunikationsverbindung zwischen dem ersten System und dem zweiten System in Abhängigkeit von dem ersten und zweiten Validierungssignal. Beispielsweise wird die erste Kommunikationsverbindung nur dann aufgebaut, wenn entsprechend dem ersten und/oder zweiten Validierungssignal die Zulässigkeit der ersten Kommunikationsverbindung festgestellt ist. Gegebenenfalls wird die erste Kommunikationsverbindung entsprechend den in den Validierungssignalen übertragenen Parameterwerten aufgebaut. Alternativ kann auch die Aufrechterhaltung der ersten drahtlosen Kommunikationsverbindung in Abhängigkeit von dem ersten und/oder zweiten Validierungssignal durchgeführt werden. Wenn also beispielsweise bei dem Validieren festgestellt wird, dass die erste Kommunikationsverbindung weiter zulässig ist, bleibt sie aufrechterhalten. Andernfalls, wenn bei dem Validieren festgestellt wird, dass die Zulässigkeit der ersten drahtlosen Kommunikationsverbindung nicht mehr gegeben ist, wird sie unterbrochen beziehungsweise abgebrochen.

Mit dem erfindungsgemäßen Validierungsprozess kann also eine drahtlose Kommunikationsverbindung automatisch sicher gesteuert beziehungsweise betrieben werden. Insbesondere kann so sichergestellt werden, dass ein bestimmter Arbeiter Zugang zu einer Maschine erhält.

Bei einer vorteilhaften Ausgestaltung des erfindungsgemäßen Verfahrens wird das erste System über die erste drahtlose Kommunikationsverbindung von dem zweiten System gesteuert. Die erste drahtlose Kommunikationsverbindung dient also zur Steuerung des ersten Systems, zum Beispiel einer Produktionsmaschinen. Als Fernsteuerungseinheit, das heißt als zweites System, kann beispielsweise ein Tablet verwendet werden.

Bei einer weiteren Ausführungsform ist vorgesehen, dass das erste System eine Präsenz des zweiten Systems oder Entfernung des zweiten Systems von dem ersten System erfasst und ein entsprechendes erstes Detektionssignal an das dritte System über die dritte drahtlose Kommunikationsverbindung übermittelt wird, und das Validieren der Zulässigkeit der ersten Kommunikationsverbindung auch in Abhängigkeit von diesem zweiten Detektionssignal erfolgt. Beispielsweise erfasst nicht nur ein Sensor des zweiten Systems das Kennzeichen des ersten Systems, sondern auch ein Sensor des ersten Systems die Präsenz oder Entfernung des zweiten Systems. In einem konkreten Beispiel erfasst eine Kamera an einer Brille (zweites System) eines Nutzers einen QR-Tag einer Produktionsmaschine (erstes System) und ein Sensor der Produktionsmaschine erfasst die Kamera mit der Brille oder alternativ den dieses zweite System tragenden Nutzer. Auf diese Weise lässt sich eine zusätzliche Bedingung für die erste drahtlose Kommunikationsverbindung überprüfen, nämlich beispielsweise die Nähe des zweiten Systems zu dem ersten System. Generell könnte es ausreichend sein, dass das zweite System überhaupt von dem ersten System erfasst wird und somit lediglich seine Präsenz festgestellt wird.

Des Weiteren kann vorgesehen sein, dass das erste System einen Nutzer des zweiten Systems erfasst und eine entsprechende Information mittels eines beziehungsweise des ersten Detektionssignals von dem ersten System zu dem dritten System über die dritte drahtlose Kommunikationsverbindung übertragen wird. Das erste Detektionssignal beinhaltet also beispielsweise eine Information darüber, dass ein (bestimmter) Nutzer des zweiten Systems überhaupt vorhanden ist. Alternativ kann das erste Detektionssignal auch eine Identifikationsinformation über den Nutzer enthalten. Eine erfolgreiche Validierung erfolgt dann nur, wenn ein vorgegebener Nutzer das zweite System bedient beziehungsweise nutzt. Auf diese Weise kann die Sicherheit der Systemanordnung weiter verbessert werden, indem nämlich als Voraussetzung für die erste Kommunikationsverbindung auch der Nutzer des zweiten Systems gegebenenfalls zusätzlich zu dem zweiten System selbst erfasst beziehungsweise erkannt wird.

In einer Weiterbildung kann das erste System eine Position und/oder eine Ausrichtung eines Körperteils des Nutzers für die entsprechende Information erfassen. So kann beispielsweise erfasst werden, ob der Nutzer des zweiten Systems seinen Blick auf das erste System richtet. Dies kann insbesondere bei schweren Stanz- oder Schneidemaschinen aus Sicherheitsgründen erforderlich sein. Gegebenenfalls können so auch Gesten eines Nutzers erfasst und für den Aufbau der ersten Kommunikationsverbindung herangezogen werden. Dabei wird beispielsweise fortlaufend eine Position beziehungsweise Ausrichtung eines Fingers oder Arms des Nutzers überwachte.

In einer anderen Ausführungsform kann vorgesehen sein, dass das Aufbauen der ersten drahtlosen Kommunikationsverbindung auf der Basis von mindestens einem Parameterwert erfolgt, der in dem ersten Validierungssignal und/oder zweiten Validierungssignal übertragen wird. Das Validierungssignal wird also nicht nur für eine binäre Validierungsentscheidung genutzt. Vielmehr wird das jeweilige Validierungssignal auch zur Parametrisierung der ersten Kommunikationsverbindung eingesetzt. Auf diese Weise lässt sich das dritte System zur Steuerung der ersten Kommunikationsverbindung, das heißt des entsprechenden Netzwerks, heranziehen. Beispielsweise handelt es sich bei diesem Netzwerk der ersten Kommunikationsverbindung um ein sogenanntes "virtuelles Mandantennetzwerk" (Virtual Tenant Network).

Entsprechend einem weiteren Ausführungsbeispiel wird das Validieren fortlaufend wiederholt durchgeführt und die erste drahtlose Kommunikationsverbindung wird jedenfalls dann unterbrochen, wenn eine Validierungsbedingung bei dem Validieren nicht mehr erfüllt ist. Dies bedeutet, dass das System dynamische Schwankungen hinsichtlich der Validierungsbedingungen verfolgen kann. Betrachtet der Nutzer beispielsweise die Schneidemaschine nicht mehr, so wird die erste Kommunikationsverbindung bei seiner Fernsteuerung der Maschine unterbrochen und die Maschine unterbricht ihren Arbeitsschritt, bzw. sie geht in einen sicheren Zustand. Die erste Kommunikationsverbindung wird also dann, wenn die Validierungsbedingung nicht mehr erfüllt ist, zeitweise unterbrochen oder dauerhaft unterbrochen, das heißt abgebrochen. Der Abbruch der Kommunikationsverbindung führt dann vorzugsweise dazu, dass die Maschine in einen sicheren Zustand übergeht (z.B. wird der aktuelle Bearbeitungsschritt sofort unterbrochen). Damit ergibt sich eine erhöhte Sicherheit während des Betriebs der Systemanordnung beziehungsweise der Systeme. Sind nämlich gewisse Validierungs- beziehungsweise Sicherheitsbedingungen nicht erfüllt, so wird eine laufende erste Kommunikationsverbindung getrennt.

Bei einer weiteren Ausgestaltung des geschilderten Verfahrens kann vorgesehen sein, dass bei dem Validieren mindestens eine beziehungsweise die Validierungsbedingung hinsichtlich des ersten und/oder zweiten Detektionssignals überprüft wird. Zum Validieren werden hier also zwei Informationskanäle verwendet, die unabhängig von der ersten drahtlosen Kommunikationsverbindung sind. Der erste Informationskanal betrifft das Erfassen des Kennzeichens des ersten Systems durch das zweite System und der zweite Informationskanal betrifft das Erfassen des zweiten Systems oder des Nutzers des zweiten Systems durch das erste System. Erst wenn einer oder beide dieser Informationskanäle die entsprechende Information für die Validierung liefern, erfolgt eine positive Validierung hinsichtlich der Zulässigkeit der ersten drahtlosen Kommunikationsverbindung.

Bei einer konkreten Ausgestaltung des erfindungsgemäßen Verfahrens erfolgt das Erfassen des Kennzeichens des ersten Systems nur in einem vorgegebenen Erfassungsbereich (z.B. Raumwinkelbereich) eines Sensors des zweiten Systems z.B. optisch oder elektromagnetisch. So kann das Kennzeichen beispielsweise mittels einer Kamera im sichtbaren Wellenlängenbereich oder im Infrarotbereich der elektromagnetischen Strahlung aufgenommen werden. Bei der elektromagnetischen Erfassung kann ein Funksignal ausgenutzt werden, das das eine System von dem anderen System empfängt. In jedem Fall ist hierdurch ein berührungsloses Erfassen des Kennzeichens möglich. Ein wesentliches Kriterium ist in diesem Beispiel, dass das Kennzeichen während des Betriebs der Systeme beziehungsweise der Systemanordnung in dem Erfassungsbereich des Sensors bleibt. Beispielsweise muss das Kennzeichen in dem räumlichen Erfassungsbereich einer Kamera, die ein Nutzer z.B. auf seiner Brille trägt, bleiben, damit die Validierungsbedingung für die erste Kommunikationsverbindung erfüllt bleibt. Verschwindet das Kennzeichen aus dem Erfassungsbereich der Kamera, kann davon ausgegangen werden, dass der Nutzer seinen Blick von dem ersten System (z.B. Produktionsmaschine) abgewandt hat. Als Konsequenz wird die erste Kommunikationsverbindung unterbrochen.

Erfindungsgemäß wird obige Aufgabe auch gelöst durch eine Systemanordnung mit
- einem ersten System, einem zweiten System und einem dritten System, wobei
- das zweite System ausgebildet ist zum Erfassen eines Kennzeichens des ersten Systems und zum Übermitteln eines zweiten Detektionssignals in Abhängigkeit von dem Erfassen des Kennzeichens an das dritte System über eine zweite drahtlose Kommunikationsverbindung,
- das dritte System ausgebildet ist zum Validieren einer Zulässigkeit einer ersten drahtlosen Kommunikationsverbindung zwischen dem ersten System und dem zweiten System auf der Basis des zweiten Detektionssignals, sowie zum Übermitteln in Abhängigkeit von dem Validieren eines ersten Validierungssignals an das erste System über eine dritte drahtlose Kommunikationsverbindung und eines zweiten Validierungssignals an das zweite System über die zweite drahtlose Kommunikationsverbindung und
- das erste zusammen mit dem zweiten System ausgebildet sind zum Aufbauen der ersten drahtlosen Kommunikationsverbindung zwischen dem ersten System und dem zweiten System in Abhängigkeit von dem ersten und zweiten Validierungssignal.

Die oben im Zusammenhang mit dem erfindungsgemäßen Verfahren geschilderten Vorteile und Variationsmöglichkeiten gelten sinngemäß auch für die erfindungsgemäße Systemanordnung.

Bei dem ersten System kann es sich um eine Produktionsmaschine, aber auch um eine Transportmaschine (zum Beispiel Förderband, Roboter) handeln. Darüber hinaus kann sich das erste System aber auch auf andere sicherheitsrelevante Geräte beziehungsweise Anlagen beziehen, die z.B. durch eine drahtlose Kommunikationsverbindung steuerbar sein sollen.

Bei einer konkreten Ausgestaltung der Systemanordnung ist so vorgesehen, dass das zweite System eine Fernbedienungseinheit, insbesondere ein Tablet oder ein Smartphone, sowie einen Sensor, insbesondere eine Kamera, aufweist. Beispielsweise trägt ein Benutzer eine Brille mit der Kamera und bedient das erste System (zum Beispiel Produktionsmaschine) mit dem Tablet. Auf diese Weise ist eine sichere und komfortable Bedienung des ersten Systems durch das zweite System ermöglicht.

Bei einer weiteren Ausgestaltung der Systemanordnung ist vorgesehen, dass das Kennzeichen des ersten Systems ein optisch erfassbarer zweidimensionaler Code, insbesondere ein QR-Code, oder ein, insbesondere aus einem RFID-Tag, elektromagnetisch auslesbarer Code ist. Derartige Codes erlauben eine hohe Sicherheit bei der automatischen Erfassung. Als Kennzeichen wird im vorliegenden Dokument also der physische Code-Träger, aber auch der Code selbst verstanden, oder ein sonstiges markantes Objekt.

Bei einer weiteren Ausgestaltung der Systemanordnung kann das erste System dazu ausgebildet sein, einen entsprechend vorbestimmten Regeln sicheren Zustand einzunehmen, sobald die erste drahtlose Kommunikationsverbindung unterbrochen oder abgebrochen ist. Dies bedeutet, dass das erste System abhängig von der ersten drahtlosen Kommunikationsverbindung gesteuert sein muss. Falls diese nämlich nicht mehr besteht, muss das erste System in einen sicheren Zustand fallen. Ein derartiger sicherer Zustand wird typischerweise durch eine systemimmanente Logik realisiert. Durch diese Sicherheitsmaßnahme kann die Sicherheit der gesamten Systemanordnung insgesamt erhöht werden.

Weiterhin kann bei einer konkreten Ausgestaltung der Systemanordnung vorgesehen sein, dass das dritte System ein Datennetzwerk oder ein Teil davon ist. Insbesondere kann es sich bei dem dritten System um das Internet oder einen Teil davon handeln. Speziell kann das dritte System durch eine sogenannte "Edge-Cloud-Umgebung" realisiert werden. Dadurch können insbesondere Ressourcen in der Nähe des ersten beziehungsweise zweiten Systems ausgenutzt werden, um die Systemgeschwindigkeit zu erhöhen.

Die vorliegende Erfindung wird nun anhand der beigefügten Zeichnungen näher erläutert, in denen zeigen:
- FIG 1: einen schematischen Überblick über eine erfindungsgemäße Systemanordnung; und
- FIG 2: ein Verfahrensablaufdiagramm eines erfindungsgemäßen Verfahrens.

Die nachfolgend näher geschilderten Ausführungsbeispiele stellen bevorzugte Ausführungsformen der vorliegenden Erfindung dar.

Unter bestimmten Randbedingungen soll eine drahtlose Kommunikationsverbindung zwischen einem ersten System und einem zweiten System hergestellt werden. Diese eine oder mehreren Randbedingungen werden von einem dritten System überprüft. Dazu erhält das dritte System von dem zweiten System eine oder mehrere Informationen über das erste System, die das zweite System unabhängig von der ersten Kommunikationsverbindung von dem ersten System gewonnen hat. Diese Informationen werden dann zur Validierung verwendet.

Das vorgeschlagene Verfahren basiert also auf einem Validierungsmechanismus, der Sensordaten für das Überprüfen notwendiger Parameter verwendet. Beispielsweise muss eine Kamera, die an einer Brille eines Arbeiters befestigt ist, einen QR-Code eines ersten Systems im Blickfeld haben. Nur wenn dies der Fall ist, wird eine Kommunikationsverbindung zwischen dem Arbeiter beziehungsweise dessen Fernsteuerung und dem zu steuernden System (System 1; zum Beispiel Produktionsmaschine) hergestellt. Gegebenenfalls muss auch eine Kamera der Maschine den Arbeiter "sehen", damit die Kommunikationsverbindung aufgebaut beziehungsweise aufrechterhalten wird. Nur wenn diese definierten Erfordernisse erfüllt sind, ist die Validierung erfolgreich. Mit einer erfolgreichen Validierung können auch die Systeme, die an der Kommunikation teilnehmen, parametrisierte werden. Hierdurch lässt sich eine direkte Kommunikation zwischen zwei Systemen aktivieren, wobei ein drittes System zur Validierung beziehungsweise Netzwerksteuerung dient. Dabei kann der Validierungsprozess fortlaufend in definierten Zeitintervallen ausgeführt werden. Die Länge des Zeitintervalls kann an den jeweiligen Prozess angepasst werden. Sobald die Validierungsbedingungen nicht mehr erfüllt sind wird die Kommunikation unterbrochen beziehungsweise abgebrochen.

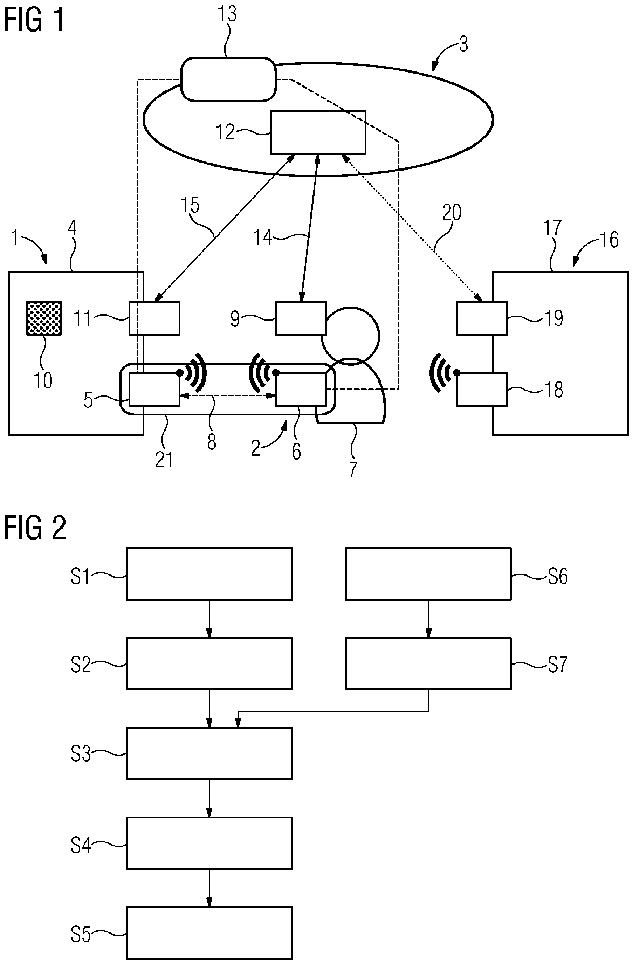

FIG 1 zeigt ein konkretes Beispiel einer erfindungsgemäßen Systemanordnung. Die Systemanordnung besitzt ein erstes System 1, ein zweites System 2 und ein drittes System 3. Bei dem ersten System 1 kann es sich um eine Produktionsmaschine 4 handeln, die eine Kommunikationsschnittstelle 5 aufweist. Bei dem zweiten System 2 kann es sich um eine Fernbedienungseinheit, wie etwa ein Tablet oder ein Smartphone, handeln, welche eine Kommunikationsschnittstelle 6 aufweist. Das zweite System 2 beziehungsweise die Fernbedienungseinheit wird von einem Nutzer 7 betätigt beziehungsweise benutzt. Zwischen den beiden Kommunikationsschnittstellen 5 und 6 soll eine direkte, erste drahtlose Kommunikationsverbindung 8 hergestellt beziehungsweise aufrechterhalten werden.

Das zweite System 2 besitzt weiterhin einen Sensor 9 zum Erfassen eines Kennzeichens des ersten Systems 1. Im vorliegenden Beispiel trägt der Nutzer 7 eine Brille, die mit dem Sensor 9, zum Beispiel einer Kamera, ausgestattet ist. Diese Kamera 9 besitzt einen vorgegebenen Erfassungsbereich, nämlich einen Raumwinkelbereich, indem er das Kennzeichen erfassen kann beziehungsweise soll. Der Sensor 9 besitzt also eine entsprechende Richtcharakteristik. Nur wenn der Sensor 9 auf das Kennzeichen 10 des ersten Systems 1 ausgerichtet ist, liefert er ein entsprechendes erstes Detektionssignal.

Optional kann auch das erste System 1 mit einem Sensor 11 ausgestattet sein, mit dem das zweite System 2 oder der Nutzer 7 detektiert werden kann. Der Sensor 11 stellt ein entsprechendes erstes Detektionssignal zur Verfügung.

Weiterhin besitzt die Systemanordnung ein drittes System 3, welches beispielsweise Teil des Internet und insbesondere eine Edge-Cloud sein kann. Dieses dritte System 3 besitzt ein Validierungsmodul 12, mit dem eine Zulässigkeit der ersten Kommunikationsverbindung 8 validiert beziehungsweise überprüft werden kann. Darüber hinaus besitzt das dritte System 3 hier ein optionales Parametrisierungsmodul 13, mit dem die erste Kommunikationsverbindung 8 parametrisierte werden kann.

Für die Validierung besteht zwischen dem zweiten System 2 und dem dritten System 3 eine zweite drahtlose Kommunikationsverbindung 14. Sie ist vorzugsweise bidirektional ausgebildet und dient zur Übertragung des zweiten Detektionssignals des Sensors 9 zum Validierungsmodul 12 sowie zum Rücksenden eines zweiten Validierungssignals entsprechend dem Ergebnis der Validierung von dem Validierungsmodule 12 zu dem zweiten System 2.

Gleichermaßen besteht zwischen dem ersten System 1 und dem dritten System 3 beziehungsweise zwischen dem Sensor 11 und dem Validierungsmodul 12 eine dritte drahtlose Kommunikationsverbindung 15 zum Übertragen eines ersten Detektionssignals bezüglich einer Erfassung durch den Sensor 11 an das Validierungsmodul 12 beziehungsweise das dritte System 3. Auch diese dritte Kommunikationsverbindung 15 kann bidirektional ausgeführt sein, um ein erstes Validierungssignal entsprechend dem Ergebnis der Validierung zurück von dem Validierungsmodul 12 beziehungsweise dem dritten System 3 an das erste System 1 zu übertragen. Dabei können die beiden Validierungssignale Parameterwerte von dem Parametrisierungsmodul 13 für die erste Kommunikationsverbindung 8 beinhalten.

In FIG 1 ist angedeutet, dass ein erweitertes System 16, das eine spezifische Maschine 17, eine Kommunikationsschnittstelle 18 und einen Sensor 19 aufweisen kann, optional in die Systemanordnung eingebunden ist. Dazu besteht gegebenenfalls eine weitere drahtlose Kommunikationsverbindung 20 zwischen diesem weiteren System 16 und dem dritte System 3. Die Systemanordnung kann also mit beliebigen weiteren Systemen erweitert werden. Das zweite System 2 kann dann gegebenenfalls direkt über einen ähnlichen Mechanismus mit dem weiteren System 16 kommunizieren.

Konkret kann in dem Beispiel von FIG 1 der vorgeschlagene Mechanismus dazu verwendet werden, ein Netzwerk 21 für die erste drahtlose Kommunikationsverbindung 8 zwischen zwei Systemen 1 und 2 zu parametrisierte und zu aktivieren. Bei diesem Netzwerk 21 kann es sich um ein sogenanntes "Virtual-Tenant-Network" (virtuelles Mandantennetzwerk) handeln, mit dem die erste Kommunikationsverbindung 8 realisierbar ist. Der Nutzer 7 muss beispielsweise die Maschine 4 kalibrieren und benötigt daher eine direkte Kommunikationsverbindung 8 zwischen seinem Fernbedienungsgerät (System 2, zum Beispiel Tablet) und der Maschine 4. Eine Kamera (Sensor 9) ist auf der Brille des Nutzers 7 befestigt und erfasst in ihrem Blickfeld beziehungsweise räumlichen Erfassungsbereich beispielsweise einen definierten QR-Code 10 des erste Systems 1.

Das erste System 1 besitzt optional den Sensor 11 (zum Beispiel Infrarotkamera), um den Nutzer 7 zu detektieren. Beide Sensoren 9 und 11 kommunizieren mit dem Validierungsprozess, der auf einer unabhängigen Computerressource (System 3) beispielsweise in einer Edge-Cloud-Umgebung läuft. Dieser Validierungsprozess validiert beziehungsweise bestätigt eine Verbindung, die der Nutzer 7 benötigt, sobald von beiden Sensoren 9 und 11 bestätigt wird, dass der Nutzer 7 sich nahe an der Maschine befindet und die Maschine in seinem Blickfeld hat. Die Bestätigung der Kommunikationsanfrage initiiert eine geeignete Konfiguration des Netzwerks 21 beziehungsweise der ersten Kommunikationsverbindung 8, die die Kommunikation zwischen dem Nutzer 7 und dem ersten System 1 ermöglicht. Die Konfigurationen für das Netzwerk 21 werden an den Kommunikationsschnittstellen 5 und 6 der Systeme 1 und 2 eingesetzt. Sobald das Einrichten dieser Netzwerkfunktionen abgeschlossen ist, besteht eine direkte Kommunikation zwischen dem Nutzer 7 und dem erste System 1. Falls der Validierungsprozess eine Nichterfüllung definierter Erfordernisse detektiert oder die Systeme 1, 2 keine Bestätigungen von dem Validierungsprozess erhalten, wird das (virtuelle) Netzwerk 21 deaktiviert und die Maschine 4 beziehungsweise das erste System 1 fällt vorzugsweise in einen sicheren Zustand, der für Mensch und Umgebung keine Gefahr darstellt. Ein entsprechender Regelungskreislauf ist in FIG 1 mit gestrichelten Linien eingezeichnet.

FIG 2 zeigt schematisch einen Verfahrensablauf gemäß der vorliegenden Erfindung. So erfolgte in einem ersten Schritt des Verfahrens zum Betreiben einer ersten drahtlosen Kommunikationsverbindung 8 zwischen dem ersten System 1 und dem zweiten System 2 ein Erfassen S1 eines Kennzeichens 10 des ersten Systems 1 durch das zweite System 2. In einem anschließenden Schritt S2 erfolgt ein Übermitteln eines zweiten Detektionssignals in Abhängigkeit von dem Erfassen des Kennzeichens 10 von dem zweiten System 2 an ein drittes System 3 über eine zweite drahtlose Kommunikationsverbindung 14. In einem folgenden Schritt S3 wird eine Zulässigkeit der ersten drahtlosen Kommunikationsverbindung 8 in dem dritten System 3 auf Basis des zweiten Detektionssignals validiert.

In einem anschließenden vierten Schritt S4 erfolgt das übermitteln in Abhängigkeit von dem Validieren eines ersten Validierungssignals von dem dritten System 3 an das erste System 1 über eine dritte drahtlose Kommunikationsverbindung 15 und eines zweiten Validierungssignals von dem dritten System 3 an das zweite System 2 über die zweite drahtlose Kommunikationsverbindung 14. Schließlich erfolgte in einem Schritt S5 ein Aufbauen oder Aufrechterhalten der ersten drahtlosen Kommunikationsverbindung 8 zwischen dem ersten System 1 und dem zweiten System 2 in Abhängigkeit von dem ersten und zweiten Validierungssignal.

Optional erfolgt in einem Schritt S6 ein Erfassen des zweiten Systems 2 oder des Nutzers 7 durch das erste System 1. Daran anschließend erfolgt in einem Schritt S7 ein Übermitteln eines erste Detektionssignals in Abhängigkeit von dem Erfassen in Schritt S6 von dem ersten System 1 an das dritte System 3 über die dritte drahtlose Kommunikationsverbindung 15.

In vorteilhafter Weise können entsprechend der vorliegenden Erfindung also Sensoren Anforderungen beobachten oder physikalische Voraussetzungen für den Betrieb einer Kommunikationsverbindung überwachen. Durch den Validierungsprozess wird eine Kommunikationsverbindung gesteuert und die Prozedur zum Validieren eines Nutzerzugangs zu einer Maschine wird automatisiert.

Speziell beeinflussen Sensoren direkt die Parametrisierung von Netzwerkfunktionen, die für das Einrichten eines (Virtual Tenant-) Netzwerks erforderlich sind. Damit stellen sie sicher, dass eine geforderte Kommunikationsqualität verfügbar ist (zum Beispiel kurze Verzögerungen, exklusiver Zugang eines Nutzers zu einer Funkverbindung).

## Patentansprüche

1. Verfahren zum Betreiben einer ersten drahtlosen Kommunikationsverbindung (8) zwischen einem ersten System (1) und einem zweiten System (2) durch
- Erfassen (S1) eines Kennzeichens (10) des ersten Systems (1) durch das zweite System (2),
- Übermitteln (S2) eines zweiten Detektionssignals in Abhängigkeit von dem Erfassen des Kennzeichens (10) von dem zweiten System (2) an ein drittes System (3) über eine zweite drahtlose Kommunikationsverbindung (14),
- Validieren (S3) einer Zulässigkeit der ersten drahtlosen Kommunikationsverbindung (8) in dem dritten System (3) auf der Basis des zweiten Detektionssignals,
- Übermitteln (S4) in Abhängigkeit von dem Validieren (S3) eines ersten Validierungssignals von dem dritten System (3) an das erste System (1) über eine dritte drahtlose Kommunikationsverbindung (15) und eines zweiten Validierungssignals von dem dritten System (3) an das zweite System (2) über die zweite drahtlose Kommunikationsverbindung (14) sowie
- Aufbauen oder Aufrechterhalten (S5) der ersten drahtlosen Kommunikationsverbindung (8) zwischen dem ersten System (1) und dem zweiten System (2) in Abhängigkeit von dem ersten und zweiten Validierungssignal.

2. Verfahren nach Anspruch 1, wobei das erste System (1) über die erste drahtlose Kommunikationsverbindung (8) von dem zweiten System (2) gesteuert wird.

3. Verfahren nach Anspruch 1 oder 2, wobei das erste System (1) eine Präsenz des zweiten Systems (2) oder Entfernung des zweiten Systems (2) von dem ersten System (1) erfasst und ein entsprechendes erstes Detektionssignal an das dritte System (3) über die dritte drahtlose Kommunikationsverbindung (15) übermittelt, und das Validieren der Zulässigkeit der ersten Kommunikationsverbindung (8) auch in Abhängigkeit von diesem ersten Detektionssignal erfolgt.

4. Verfahren nach einem der vorhergehenden Ansprüche, wobei das erste System (1) einen Nutzer (7) des zweiten Systems (2) erfasst und eine entsprechende Information mittels eines beziehungsweise des ersten Detektionssignals von dem ersten System (1) zu dem dritten System (3) über die dritte drahtlose Kommunikationsverbindung (15) übertragen wird.

5. Verfahren nach Anspruch 4, wobei das erste System (1) eine Position und/oder eine Ausrichtung eines Körperteils des Nutzers (7) für die entsprechende Information erfasst.

6. Verfahren nach einem der vorhergehenden Ansprüche, wobei das Aufbauen (S5) der ersten drahtlosen Kommunikationsverbindung (8) auf der Basis von mindestens einem Parameterwert erfolgt, der in dem ersten Validierungssignal und/oder zweiten Validierungssignal übertragen wird.

7. Verfahren nach einem der vorhergehenden Ansprüche, wobei das Validieren (S3) fortlaufend wiederholt durchgeführt wird und die erste drahtlose Kommunikationsverbindung (8) jedenfalls dann unterbrochen wird, wenn eine Validierungsbedingung bei dem Validieren nicht mehr erfüllt ist.

8. Verfahren nach einem der vorhergehenden Ansprüche, wobei bei dem Validieren (s3) mindestens eine beziehungsweise die Validierungsbedingung hinsichtlich des ersten und/oder zweiten Detektionssignals überprüft wird.

9. Verfahren nach einem der vorhergehenden Ansprüche, wobei das Erfassen (s1) des Kennzeichens (10) des ersten Systems (1) nur in einem vorgegebenen Erfassungsbereich eines Sensors (9) des zweiten Systems (2) erfolgt.

10. Systemanordnung mit
- einem ersten System (1), einem zweiten System (2) und einem dritten System (3), wobei
- das zweite System (2) ausgebildet ist zum Erfassen eines Kennzeichens (10) des ersten Systems (1) und zum Übermitteln eines zweiten Detektionssignals in Abhängigkeit von dem Erfassen des Kennzeichens (10) an das dritte System (3) über eine zweite drahtlose Kommunikationsverbindung (14),
- das dritte System ausgebildet ist zum Validieren einer Zulässigkeit einer ersten drahtlosen Kommunikationsverbindung (8) zwischen dem ersten System (1) und dem zweiten System (2) auf der Basis des zweiten Detektionssignals, sowie zum Übermitteln in Abhängigkeit von dem Validieren eines ersten Validierungssignals an das erste System (1) über eine dritte drahtlose Kommunikationsverbindung (15) und eines zweiten Validierungssignals an das zweite System (2) über die zweite drahtlose Kommunikationsverbindung (14) und
- das erste zusammen mit dem zweiten System (2) ausgebildet sind zum Aufbauen der ersten drahtlosen Kommunikationsverbindung (8) zwischen dem ersten System (1) und dem zweiten System (2) in Abhängigkeit von dem ersten und zweiten Validierungssignal.

11. Systemanordnung nach Anspruch 10, wobei das erste System (1) eine Produktionsmaschine (4) aufweist.

12. Systemanordnung nach Anspruch 10 oder 11, wobei das zweite System (2) eine Fernbedienungseinheit, insbesondere ein Tablet oder ein Smartphone, sowie einen Sensor (11), insbesondere eine Kamera, aufweist.

13. Systemanordnung nach einem der Ansprüche 10 bis 12, wobei das Kennzeichen (10) des ersten Systems (1) ein optisch erfassbarer zweidimensionaler Code, insbesondere ein QR-Code, oder ein, insbesondere aus einem RFID-Tag, elektromagnetisch auslesbarer Code ist.

14. Systemanordnung nach einem der Ansprüche 10 bis 13, wobei das erste System (1) dazu ausgebildet ist, einen entsprechend vorbestimmter Regeln sicheren Zustand einzunehmen, sobald die erste drahtlose Kommunikationsverbindung (8) unterbrochen oder abgebrochen ist.

15. Systemanordnung nach einem der Ansprüche 10 bis 14, wobei das dritte System (3) ein Datennetzwerk oder eine Teil davon ist.
